(19) Europäisches Patentamt
European Patent Office
Office européen des brevets

(11) EP 2 009 035 A1

(12) # EUROPÄISCHE PATENTANMELDUNG

(43) Veröffentlichungstag:
**31.12.2008 Patentblatt 2009/01**

(51) Int Cl.:
***C08F 220/24*** *(2006.01)* ***D06M 15/277*** *(2006.01)*

(21) Anmeldenummer: **07012551.3**

(22) Anmeldetag: **27.06.2007**

(84) Benannte Vertragsstaaten:
**AT BE BG CH CY CZ DE DK EE ES FI FR GB GR HU IE IS IT LI LT LU LV MC MT NL PL PT RO SE SI SK TR**
Benannte Erstreckungsstaaten:
**AL BA HR MK RS**

(71) Anmelder: **Huntsman Textile Effects (Germany) GmbH**
**86462 Langweid a. Lech (DE)**

(72) Erfinder:
- **Moors, Rolf, Dr.**
  **86486 Bonstetten (DE)**
- **Artner, Wilhelm**
  **86568 Motzenhofen (DE)**
- **Rettenbacher, Isabella**
  **86368 Gersthofen (DE)**
- **Schidek, Edeltraud**
  **86156 Augsburg (DE)**

(54) **Copolymere mit Perfluoralkylgruppen und wässrige Dispersionen davon**

(57) Copolymere, welche aus mindestens 4 Monomeren, darunter Perfluoralkylgruppen enthaltende (Meth-)Acrylatverbindungen, aufgebaut sind, eignen sich zur Behandlung von Fasermaterialien. Die Copolymeren werden üblicherweise hierfür in Form wässriger Dispersionen eingesetzt. Die Fasermaterialien sind insbesondere textile Flächengebilde, beispielsweise aus Polyolefin. Die Behandlung mit den Copolymeren verleiht ihnen öl- und wasserabweisende Eigenschaften sowie abweisende Eigenschaften gegenüber niedrigmolekularen Alkoholen.

EP 2 009 035 A1

## Beschreibung

Die Erfindung betrifft neue Copolymere, welche Perfluoralkylgruppen ($R_F$) enthalten. Sie betrifft ferner wässrige Dispersionen dieser Copolymeren und ihre Verwendung.

Copolymere, welche Perfluoralkylgruppen ($R_F$) enthalten und die Verwendung dieser Copolymeren zur Behandlung von Fasermaterialien sind bekannt. Dies geht beispielsweise hervor aus der FR-A 2 213 333, der DE-A 27 02 632 und der EP-A 234 724.

Die aus dem Stand der Technik bekannten Copolymeren und deren wässrige Dispersionen weisen neben Vorteilen auch Nachteile auf. Dies gilt insbesondere dann, wenn sie zur Behandlung von Fasermaterialien aus Polyolefinen, vor allem aus Polypropylen dienen sollen. Es hat sich nämlich gezeigt, dass relativ hohe Temperaturen angewandt werden müssen, um die angestrebten Effekte auf den Fasermaterialien zu erzielen. Diese Effekte sind beispielsweise öl-/wasserabweisende Eigenschaften und alkoholabweisende Eigenschaften. Von Artikeln aus Polypropylen, die im medizinischen Bereich eingesetzt werden sollen, wird vielfach verlangt, dass sie niedrigmolekulare Alkohole wie Isopropanol effektiv abweisen. Für andere Einsatzgebiete, wie z.B. im Automobilbereich, ist dagegen nicht abweisende Wirkung gegenüber Alkoholen, sondern ölabweisende Wirkung von zentraler Bedeutung. Dies gilt auch für Fasermaterialien aus anderen Polymeren wie z.B. Polyester und Polyester/Cellulose-Mischungen. Um solche alkoholabweisenden und/oder öl-/wasserabweisenden Eigenschaften zu erzielen, müssen die mit $R_F$-Copolymeren behandelten Fasermaterialien erhöhten Temperaturen ausgesetzt werden. Im Fall von aus dem Stand der Technik bekannten $R_F$-Copolymeren sind hierzu häufig Temperaturen von mehr als 130 bis 140°C erforderlich. Damit sind diese Copolymeren nicht oder nur bedingt für Fasermaterialien geeignet, welche bei den genannten Temperaturen geschädigt werden. Insbesondere im Fall von Fasermaterialien aus Polypropylen besteht die Gefahr, dass nach Behandlung mit bekannten $R_F$-Copolymeren und Erhitzen auf mehr als 130°C das Polypropylenmaterial geschädigt wird.

Die Aufgabe der vorliegenden Erfindung bestand darin, neue, Perfluoralkylgruppen enthaltende, Copolymere und wässrige Dispersionen davon zur Verfügung zu stellen, wobei es möglich sein sollte, die mit den Copolymeren behandelten Fasermaterialien auf Temperaturen von nicht mehr als 130 bis 140°C zu erhitzen und trotzdem ausgezeichnete Eigenschaften bezüglich Abweisung von Öl, Wasser und niedrigmolekularen Alkoholen zu erzielen.

Die Aufgabe wurde gelöst durch Copolymere, welche einpolymerisierte Einheiten enthalten, die aus Monomeren der Formeln a) bis d) stammen

a)

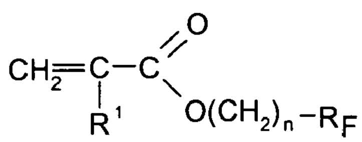

b)

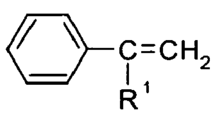

c)

$CH_2 = C\ Cl_2$

d)

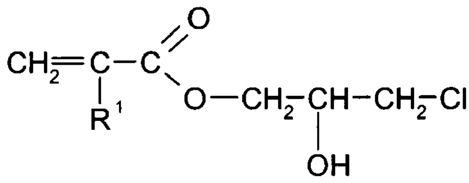

wobei alle Reste $R^1$ unabhängig voneinander für Wasserstoff oder die Methylgruppe stehen, $R_F$ einen Perfluoralkylrest der Formel

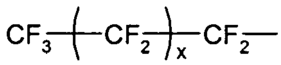

bedeutet, worin x eine Zahl von 2 bis 22 ist.
n eine Zahl von 2 bis 6 ist, wobei n vorzugsweise den Wert 2 besitzt und durch wässrige Dispersionen solcher Copolymerer.

Es ist möglich, Fasermaterialien mit wässrigen Dispersionen erfindungsgemäßer Copolymerer zu behandeln, sie gegebenenfalls in einem separaten Arbeitsgang zu trocknen und sie dann auf eine Temperatur von 80°C bis 140°C zu erhitzen und hierbei ausgezeichnete öl-/wasserabweisende Eigenschaften sowie ausgezeichnete Eigenschaften bezüglich Abweisung von niedrigmolekularen Alkoholen wie insbesondere Isopropanol zu erzielen. Dies ist von großer Bedeutung, wenn die Fasermaterialien, z.B. nonwovens, aus Polyolefinen, vor allem aus Polypropylen, bestehen und im medinizischen Bereich verwendet werden sollen. Ferner ist die ölabweisende Wirkung u.a. von Bedeutung, wenn die Fasermaterialien, z.B. aus Polyester oder Polyester-Mischungen im Automobilbereich eingesetzt werden sollen. Die erfindungsgemäßen Copolymeren eignen sich also gut für Prozesse ("low-cure-Verfahren"), die bei Temperaturen von nicht mehr als 140°C ablaufen dürfen, um Schädigung des Fasermaterials, z.B. aus Polypropylen, zu vermeiden. Dies ist ein für den Fachmann unerwarteter und überraschender Vorteil gegenüber aus dem Stand der Technik bekannten Copolymeren, sowohl was ökonomische als auch ökologische Aspekte betrifft. Außerdem wurde gefunden, dass es bei Verwendung erfindungsgemäßer Copolymerer möglich ist, den behandelten Fasermaterialien ausgesprochen weichen Griff zu verleihen.

Ein weiterer Vorteil erfindungsgemäßer Copolymerer liegt wegen der Anwendbarkeit bei relativ niedrigen Temperaturen noch darin, dass die Behandlung von Fasermaterialien mit diesen Copolymeren es ermöglicht, Fasermaterialien günstige Eigenschaften bezüglich temperaturbedingter Vergilbung und Thermomigration zu verleihen.

Erfindungsgemäße Copolymere enthalten einpolymerisierte Einheiten, welche aus den Monomeren a) bis d) stammen.

a)

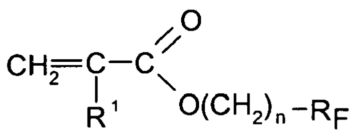

b)

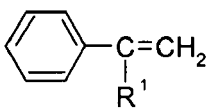

c)

$CH_2 = C\ Cl_2$

d)

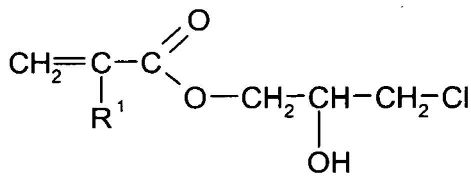

Alle 4 dieser Einheiten müssen vertreten sein, um die Vorteile der erfindungsgemäßen Copolymeren zu erzielen.

In den Formeln a) bis d) bedeuten alle Reste $R^1$ unabhängig voneinander Wasserstoff oder die Methylgruppe, $R_F$ einen Perfluoralkylrest der Formel

$$CF_3-(CF_2)_x-CF_2-$$

worin x eine Zahl von 2 bis 22 ist,
n eine Zahl von 2 bis 6, wobei n vorzugsweise den Wert 2 besitzt.

Die Copolymeren müssen nicht aus jeweils nur einer einzigen Art von Monomeren a) bis d) aufgebaut sein. Vielmehr können bei ihrer Herstellung auch Gemische von Monomeren a) und/oder Monomeren b) und oder Monomeren d) eingesetzt worden sein, z.B. Gemische, deren Komponenten sich in der Kettenlänge von $R_F$ oder in der Natur des Rests $R^1$ unterscheiden; z.B. können als Monomere a) und/oder als Monomere d) Gemische aus Acrylaten und Methacrylaten eingesetzt werden, als Monomer b) kann Styrol, α-Methylstyrol oder ein Gemisch dieser beiden Monomeren verwendet werden.

Die gleichen Aussagen gelten auch bezüglich der nur fakultativ anwesenden Einheiten, die aus Monomeren e) bis h) stammen, welche unten beschrieben werden. Hier kommen vor allem Gemische mit unterschiedlichen Kettenlängen der Reste $C_tH_{2t+1}$ in Frage.

In Momomer a) ist $R_F$ vorzugsweise ein Perfluoralkylrest mit 8 bis 18 Kohlenstoffatomen. In Monomer b) ist der Rest $R^1$ vorzugsweise Wasserstoff. Monomer b) ist also vorzugsweise Styrol.

Je nach Einsatzzweck der behandelten Fasermaterialien kann es von Vorteil sein, wenn die erfindungsgemäßen Copolymeren zusätzlich eine oder mehrere einpolymerisierte Einheiten enthalten, die aus Monomeren e) bis h) stammen

e)

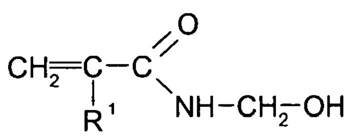

f)

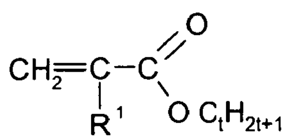

g)

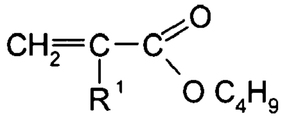

h)

$C_tH_{2t+1}$-SH

worin $R^1$ die in Anspruch 1 genannte Bedeutung besitzt und t eine Zahl von 8 bis 24 ist.

In Formel f) steht der Rest $C_tH_{2t+1}$ vorzugsweise für einen unverzweigten Kohlenwasserstoffrest mit 12 bis 20 Kohlenstoffatomen.

Die Vorteile, welche sich bei zusätzlicher Verwendung von Monomeren der Formeln e), f) und g) erhalten lassen, bestehen darin, dass im Fall der Verwendung eines Monomeren e) bessere Vernetzung der erfindungsgemäßen Copolymeren erzielbar ist, entweder mit sich selbst oder mit Fasern, wie z.B. Cellulosefasern; im Fall der Verwendung eines Monomeren f) sind besserer Weichgriff der mit erfindungsgemäßen Copolymeren behandelten Fasermaterialien zu erzielen, sowie bessere wasserabweisende Eigenschaften; bei Verwendung von Monomeren g) lassen sich bessere ölabweisende Eigenschaften ausgerüsteter Fasermaterialien erzielen.

Vorzugsweise sind die Reste $C_tH_{2t+1}$ und $C_4H_9$ in den Monomeren f) und g) lineare Alkylreste. Monomer h) ist gut geeignet als Komponente bei der Herstellung der Copolymeren. Es dient als Kettenabbruchmittel bei der radikalischen Polymerisation.

Die Monomeren a) bis h) sind gängige, auf dem Markt erhältliche Produkte bzw. können nach allgemein bekannten Methoden hergestellt werden. Monomer e) beispielsweise lässt sich durch Umsetzung von (Meth-)Acrylamid mit Formaldehyd herstellen, Monomer d) ist beziehbar von SHIN-NAKAMURA CHEMICALS Co., Ltd, oder von Aldrich Chemicals (CAS: 13159-52-9); Monomer a) kann von der Firma Du Pont bezogen werden.

Die Herstellung der erfindungsgemäßen Copolymeren aus den Monomeren a) bis d), gegebenenfalls unter gleichzeitiger Verwendung von einem oder mehreren der Monomeren e) bis h), kann nach allgemein bekannten Methoden erfolgen. Üblicherweise verläuft die Copolymerisation als radikalische Polymerisation bei Temperaturen im Bereich von 20°C bis 70°C entweder in einem geeigneten Lösungsmittel oder Dispergiermittel oder ohne Verwendung eines Lösungs-/ Dispergiermittels. Falls die erfindungsgemäßen Copolymeren in Form wässriger Dispersionen zur Behandlung von Fasermaterialien eingesetzt werden sollen, ist es vielfach von Vorteil, sie in wässrigem Medium als Dispergiermittel herzustellen. Hierbei werden üblicherweise bekannte Dispergatoren mitverwendet. Geeignet sind beispielsweise ethoxilierte Alkohole, gegebenenfalls in Kombination mit üblichen kationaktiven Tensiden.

Die radikalische Copolymerisation zur Herstellung erfindungsgemäßer Copolymerer verläuft normalerweise unter Verwendung von bekannten Verbindungen, welche bei erhöhten Temperaturen Radikale bilden, die dann die Copolymerisation einleiten. Beispiele geeigneter Radikalbildner sind handelsübliche Azoverbindungen, Sulfinsäuren und Peroxide bzw. deren Salze.

Bei der Herstellung der erfindungsgemäßen Copolymeren werden die Monomeren a) bis g) vorzugsweise in solchen Mengen verwendet, dass die gebildeten Copolymeren die aus den Monomeren a) bis g) stammenden Einheiten in folgenden relativen Mengen enthalten:

35 bis 55 Mol % an aus a) stammenden Einheiten insbesondere 42 bis 50 Mol %
8 bis 55 Mol % an aus b) stammenden Einheiten insbesondere 20 bis 45 Mol %
8 bis 42 Mol % an aus c) stammenden Einheiten insbesondere 8 bis 32 Mol %
4 bis 18 Mol % an aus d) stammenden Einheiten insbesondere 4 bis 12 Mol %
3 bis 16 Mol % an aus e) stammenden Einheiten insbesondere 5 bis 12 Mol %
4 bis 16 Mol % an aus f) stammenden Einheiten insbesondere 6 bis 13 Mol %
3 bis 16 Mol % an aus g) stammenden Einheiten insbesondere 5 bis 11 Mol %.

Die aus Monomer h) stammenden Einheiten sind vorzugsweise zu 0,5 bis 1,5 Gew% im Copolymeren enthalten.

Die oben genannte Angabe "Mol %" an aus a) stammenden Einheiten ist gemäß folgendem Beispiel charakterisiert:

Wenn ein Copolymer 10 Einheiten enthält, die aus Monomer a) stammen, und daneben insgesamt 50 Einheiten, die aus Monomeren b) bis g) stammen, so enthält es

$$\frac{10}{10 + 50} \times 100 \text{ Mol \%},$$

d.h. 16,6 Mol % an aus a) stammenden Einheiten.
Analoges gilt für die Anteile an aus Monomeren b) bis g) stammenden Einheiten.

Die einzelnen Mengen an den verwendeten Monomeren a) bis g) werden hierbei vorzugsweise so gewählt, dass das Copolymer einen Fluorgehalt im Bereich von 30 bis 50 Gew% aufweist.

Die erfindungsgemäßen Copolymeren sind besonders gut geeignet für die Behandlung von Fasermaterialien. Vorzugsweise werden sie hierfür in Form wässriger Dispersionen eingesetzt. Diese wässrigen Dispersionen enthalten ein erfindungsgemäßes Copolymer oder ein Gemisch solcher Copolymerer, vorzugsweise in einer Konzentration im Bereich von 5 bis 50 Gew%, besonders bevorzugt von 5 bis 25 Gew%. Diese Dispersionen werden vor ihrer Verwendung für Faserbehandlung zweckmäßigerweise mit Wasser verdünnt. Daneben enthalten die Dispersionen üblicherweise bekannte oberflächenaktive Produkte als Dispergatoren. Sie können darüber hinaus noch weitere Bestandteile enthalten, welche für die Behandlung von Fasermaterialien erwünscht sind, wie z.B. Flammschutzmittel, Polyorganosiloxane usw. Diese weiteren Bestandteile können aus dem Fachmann bekannten Gruppen von Produkten ausgewählt werden.

Die Herstellung der wässrigen Dispersionen kann, wie oben erwähnt, beispielsweise dadurch erfolgen, dass bereits die Copolymerisation der Monomeren in wässrigem Medium in Anwesenheit von Dispergatoren durchgeführt wird. Werden die Copolymeren auf andere Weise hergestellt, so können sie anschließend in Wasser unter Mitverwendung von Dispergatoren dispergiert werden, woran sich gegebenenfalls eine mechanische Homogenisierung bei Raumtemperatur oder erhöhter Temperatur anschließt.

Die Fasermaterialien, welche mit erfindungsgemäßen Copolymeren bzw. deren wässrigen Dispersionen behandelt werden, sind vorzugsweise textile Flächengebilde in Form von Geweben, von Maschenware oder von Vliesen (nonwovens).

Besonders gut geeignet sind die erfindungsgemäßen Copolymeren zur Behandlung von Flächengebilden, die nonwovens aus Polyolefinen, insbesondere aus Polypropylen, sind. Solchermaßen behandelte Polypropylenmaterialien lassen sich vorteilhaft im medizinischen Bereich einsetzen.

Die Behandlung der Fasermaterialien mit wässrigen Dispersionen erfindungsgemäßer Copolymerer führt zu ausgezeichneten öl- und wasserabweisenden Eigenschaften auch im Rahmen von "Low-Cure"-Verfahren, die bei relativ niedriger Temperatur durchgeführt werden. Ferner lassen sich auf den Fasermaterialien gute abweisende Effekte gegenüber niedrigmolekularen Alkoholen wie Isopropanol erzielen sowie, falls gewünscht, ein angenehm weicher Griff der Materialien.

Die Erfindung wird nunmehr durch Ausführungsbeispiele veranschaulicht.

<u>Beispiel 1 (erfindungsgemäß)</u>

Folgende Produkte wurden miteinander vermischt

- Lösung von 20 g eines ethoxilierten Isotridecylalkohols (12 EO) in 330 g Wasser
- 55 g Dipropylenglykol
- 170 g eines Acrylatesters mit Perfluoralkylgruppen in der Alkoholkomponente (ZONYL TAN, Fa. Du Pont), entsprechend Monomer a) gemäß Anspruch 1
- 15 g Methacrylat eines längerkettigen Alkohols
- 2 g n-Dodecylmercaptan (Monomer h) gemäß Anspruch 2)
- 19 g einer 10 Gew %igen Lösung von N-Methylolacrylamid in Wasser (Monomer e) gemäß Anspruch 2)
- 5 g n-Butylacrylat (Monomer g) gemäß Anspruch 2)
- 5 g eines Diesters eines zweiwertigen Alkohols (Eastman TXIB)
- 10 g Styrol (Monomer b) gemäß Anspruch 1)

- 11 g eines Silikonöls (Silikonöl L 080 der Fa. Wacker)

- 5 g 3-Chloro-2-hydroxy-propyl-methacrylat (Monomer d) gemäß Anspruch 1)

Die erhaltene Mischung wurde bei einer Temperatur von maximal 60°C 1 Minute gerührt und dann bei 250 bar und 60°C einer Hochdruckhomogenisierung unterworfen. Nach Abkühlen wurde die erhaltene Mischung in einen Autoklav überführt, dann zuerst 3 g einer Azoverbindung (Initiator für Radikalpolymerisation) zugegeben, anschließend 10 g Vinylidenchlorid (Monomer c) gemäß Anspruch 1).

Das Gemisch wurde dann im Autoklav innerhalb 30 Minuten auf 65°C erwärmt und bei dieser Temperatur 8 Stunden gerührt.

Man erhielt eine stabile transparente Dispersion mit einem Fluor-Gehalt von 13,9 Gew%.

<u>Beispiel 2 (erfindungsgemäß)</u>

Beispiel 1 wurde wiederholt, mit dem einzigen Unterschied, dass nicht 10 g Styrol eingesetzt wurden, sondern 15 g.

<u>Beispiel 3 (erfindungsgemäß)</u>

Beispiel 1 wurde wiederholt, mit dem einzigen Unterschied, dass nicht 10 g Styrol eingesetzt wurden, sondern 20 g.

<u>Beispiel 4</u> (nicht-erfindungsgemäßes Vergleichsbeispiel)

Es wurde gearbeitet wie in Beispiel 1, jedoch ohne Verwendung von Vinylidenchlorid (Monomer c) gemäß Anspruch 1.

<u>Beispiel 5</u> (nicht-erfindungsgemäßes Vergleichsbeispiel)

Es wurde gearbeitet wie in Beispiel 1, jedoch ohne Verwendung von Styrol (Monomer b) gemäß Anspruch 1.

<u>Beispiel 6</u> (nicht-erfindungsgemäßes Vergleichsbeispiel)

Es wurde gearbeitet wie in Beispiel 1, jedoch ohne Verwendung des dort genannten Chlorohydroxypropylmethacrylats (Monomer d) gemäß Anspruch 1.

<u>Beispiel 7</u> (nicht-erfindungsgemäßes Vergleichsbeispiel)

Es wurde ein Copolymer in Anlehnung an Example 1 der EP-A 234 724 hergestellt.

Bei der Herstellung dieses Copolymers wurde kein Monomer b) und kein Monomer d) gemäß der oben genannten Art verwendet.

Zur Herstellung des Copolymeren wurden

| | |
|---|---|
| 10 g | ethoxilierter Isotridecylalkohol (15 EO) |
| 1 g | kationischer Dispergator |
| 32 g | Stearylmethacrylat |
| 1 g | konzentrierte Essigsäurelösung |
| 116 g | Acrylatester mit Perfluoralkylgruppen (Zonyl TAN wie in Beispiel 1) |
| 10 g | N-Methylolacrylamid |
| 2 g | n-Dodecylmercaptan |
| und | |
| 590 g | Wasser |

miteinander vermischt und bei 50°C gerührt, anschließend bei 100 bis 150 bar und bei einer Temperatur von 45 - 50°C hochdruckhomogenisiert.

Nach Spülen mit Stickstoff und Zugabe von 50 g Vinylidenchlorid, 1,6 g Radikalinitiator und 10 g Wasser wurde

das Gemisch erwärmt, wobei die Temperatur im Verlauf von 12 Stunden langsam von 20°C auf 50°C anstieg. Man erhielt eine milchige Dispersion.

Beispiel 8 (erfindungsgemäß)

Beispiel 7 wurde wiederholt, wobei dem Gemisch vor der Hochdruckhomogenisierung noch 7 g Styrol (Monomer b)) und 3,5 g 3-Chlor-2-hydroxypropylmethacrylat (Monomer d)) zugesetzt wurden.

Mit den Dispersionen, welche bei den Beispielen 1 bis 8 erhalten worden waren, wurden Materialien aus Polyester-Taft jeweils über einen Foulard-Prozeß behandelt. Die Konzentrationen der einzelnen Dispersionen in den wässrigen Foulard-Flotten wurden so eingestellt, dass jede Flotte einen Fluorgehalt von etwa 1,2 g F/l aufwies. Außerdem wurden jeder Flotte vor der Behandlung des Polyester-Tafts noch 1 g/l 60%iger Essigsäure und 5 g/l eines Netzmittels hinzugefügt.

Bei der Foulardierung nahmen die einzelnen Proben etwa 40 - 60 % ihres Eigengewichts an Flotte auf, wobei sich diese Zahlen auf Werte nach dem Abquetschen beziehen.

Anschließend wurden die Taft-Proben 8 Minuten bei 40°C getrocknet und 1 Minute bei 60°C kondensiert. An den erhaltenen Proben wurden der sog. "Spray-Wert", die Wasseraufnahme in %, der "Abperleffekt" bestimmt sowie der EDANA-Test durchgeführt.

Dabei wurden folgende Methoden verwendet:

1. EDANA-Test Dieser Test liefert eine Aussage darüber, welche alkoholabweisenden Eigenschaften Flächengebilde aus Fasermaterialien gegenüber niedrigmolekularen Alkoholen besitzen. Bei den vorliegenden Proben aus den 8 Beispielen wurde der Test durchgeführt, wie er in dem Papier "Standard Test: WSP 80.8 (05), Standard Test Method for Alcohol Repellency of Nonwoven Fabrics", Ausgabe 2005, der "European Disposables and Nonwovens Association" beschrieben ist. Die Beschreibung dieser Testmethode ist enthalten in "World Wide Strategic Partner: Standard Test Methods for Nonwovens Industry. Author: INDA and EDANA". Als Testlösungen wurden Gemische aus

Isopropanol/Wasser mit unterschiedlichen Mischungsverhältnissen verwendet. Das Ergebnis des Tests wird in Noten von 0 bis 10 ausgedrückt, wobei höhere Noten effektivere Abweisung von Isopropanol bedeuten.

2. Wasseraufnahme in %
Hierbei wird bestimmt, wieviel Gew% an Wasser die ausgerüstete Textilprobe unter den Bedingungen der Testmethode "Bundesmann: Beregnung, DIN EN 29865 = ISO 9865", (Ausgabe November 1993) aufnimmt. Höhere Werte für die Ergebnisse bedeuten also stärkere Waseraufnahme, d.h. schlechtere wasserabweisende Wirkung.

3. Abperleffekt Dieser Test wird ebenfalls nach der unter Nr. 2 beschriebenen Methode ("Bundesmann DIN ISO) durchgeführt. Die Ergebnisse werden in Noten von 1 bis 5 ausgedrückt, wobei Note 5 die beste und Note 1 die schlechteste abweisende Wirkung gegenüber Wasser bedeutet.

4. "Spray-Test"
Dieser Test wird nach der in AATCC TM 22/ISO 4920 (2005) angegebenen Methode durchgeführt. Das Prinzip der Methode besteht darin, dass man die Probe mit Wasser besprüht und die Benetzung visuell beurteilt.
Die Ergebnisse werden in Noten ausgedrückt, wobei 100 die beste und 0 die schlechteste Bewertung darstellt.

Die an den Proben von Beispiel 1 bis 8 ermittelten Ergebnisse sind in der nachfolgenden Tabelle dargestellt. Der Spray-Test wurde dreimal durchgeführt, beim Abperltest wurden insgesamt 3 Werte zu unterschiedlichen Zeitpunkten ermittelt, daher jeweils 3 Noten für jede Probe.

| Beispiel | EDANA | Wasseraufnahme (Gew%) | Abperleffekt Note | Spray Note |
|---|---|---|---|---|
| 1 | 1 - 2 | 18 | 5/5/5 | 100/100/100 |
| 2 | 3 - 4 | 15 | 4/4/4 | 100/100/100 |
| 3 | 3 - 4 | 6 | 5/5/5 | 100/100/100 |
| 4 | 0 | 31 | 1/1/1 | 50/0/0 |
| 5 | 0 - 1 | 24 | 1/1/1 | 80/70/50 |
| 6 | 1 | 22 | 1/1/1 | 70/50/50 |

(fortgesetzt)

| Beispiel | EDANA | Wasseraufnahme (Gew%) | Abperleffekt Note | Spray Note |
|---|---|---|---|---|
| 7 | 0 | 20 | 1/1/1 | 70/50/0 |
| 8 | 1 - 2 | 12 | 5/5/5 | 100/100/100 |

Die Tabelle zeigt, dass die in den erfindungsgemäßen Beispielen 1, 2, 3 und 8 erhaltenen Dispersionen zu effektiverer Wasser-/Alkoholabweisung der ausgerüsteten Taft-Proben führen als die Dispersionen der nicht-erfindungsgemäßen Beispiele 4 bis 7.

## Patentansprüche

**1.** Copolymere, welche einpolymerisierte Einheiten enthalten, die aus Monomeren der Formeln a) bis d) stammen

a)

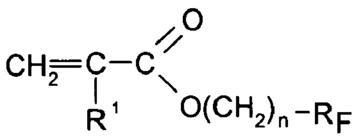

b)

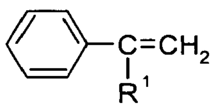

c)

$CH_2 = C\,Cl_2$

d)

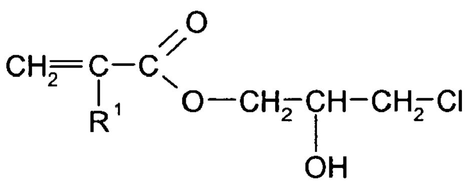

wobei alle Reste $R^1$ unabhängig voneinander für Wasserstoff oder die Methylgruppe stehen,
$R_F$ einen Perfluoralkylrest der Formel

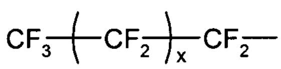

bedeutet, worin x eine Zahl von 2 bis 22 ist.
n eine Zahl von 2 bis 6 ist, wobei n vorzugsweise den Wert 2 besitzt.

**2.** Copolymere nach Anspruch 1, **dadurch gekennzeichnet, dass** sie zusätzlich eine oder mehrere einpolymerisierte Einheiten enthalten, die aus Monomeren e) bis h) stammen

e)

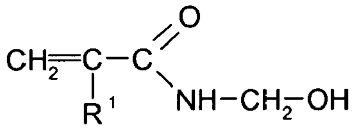

f)

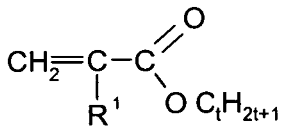

g)

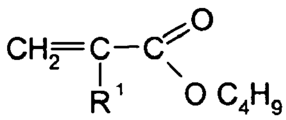

h)

$C_tH_{2t+1}$-SH

worin $R^1$ die in Anspruch 1 genannte Bedeutung besitzt und t eine Zahl von 8 bis 24 ist.

**3.** Copolymere nach Anspruch 1 oder 2, **dadurch gekennzeichnet, dass** sie die aus den Monomeren a) bis g) stammenden Einheiten in folgenden relativen Mengen enthalten:

35 bis 55 Mol % an aus a) stammenden Einheiten insbesondere 42 bis 50 Mol %
8 bis 55 Mol % an aus b) stammenden Einheiten insbesondere 20 bis 45 Mol %
8 bis 42 Mol % an aus c) stammenden Einheiten insbesondere 8 bis 32 Mol %
4 bis 18 Mol % an aus d) stammenden Einheiten insbesondere 4 bis 12 Mol %
3 bis 16 Mol % an aus e) stammenden Einheiten insbesondere 5 bis 12 Mol %
4 bis 16 Mol % an aus f) stammenden Einheiten insbesondere 6 bis 13 Mol %
3 bis 16 Mol % an aus g) stammenden Einheiten insbesondere 5 bis 11 Mol %.

**4.** Wässrige Dispersion, welche ein oder mehrere Copolymere gemäß einem oder mehreren der Ansprüche 1 bis 3 enthält.

**5.** Verwendung einer wässrigen Dispersion nach Anspruch 4 zur Behandlung von Fasermaterialien.

**6.** Verwendung nach Anspruch 5, **dadurch gekennzeichnet, dass** die Fasermaterialien textile Flächengebilde in Form von Geweben, von Maschenware oder von Vliesen (nonwovens) sind.

**7.** Verwendung nach Anspruch 6, **dadurch gekennzeichnet, dass** die textilen Flächengebilde Nonwovens aus Polyolefinen, insbesondere aus Polypropylen, sind.

Europäisches Patentamt

# EUROPÄISCHER RECHERCHENBERICHT

Nummer der Anmeldung
EP 07 01 2551

| EINSCHLÄGIGE DOKUMENTE | | | |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (IPC) |
| D,A | EP 0 234 724 A1 (DU PONT [US]) 2. September 1987 (1987-09-02) * das ganze Dokument * ----- | 1-7 | INV. C08F220/24 D06M15/277 |
| A | EP 1 365 000 A (DAIKIN IND LTD [JP]) 26. November 2003 (2003-11-26) * Beispiel 17; Tabelle 2 * ----- | 1-7 | |
| A | US 5 387 640 A (MICHELS GISBERT [DE] ET AL) 7. Februar 1995 (1995-02-07) * Beispiel 3 * ----- | 1-7 | |
| | | | RECHERCHIERTE SACHGEBIETE (IPC) |
| | | | C08F D06M |

Der vorliegende Recherchenbericht wurde für alle Patentansprüche erstellt

1

| Recherchenort | Abschlußdatum der Recherche | Prüfer |
|---|---|---|
| München | 18. September 2007 | Baekelmans, Didier |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
......................................................................................................
& : Mitglied der gleichen Patentfamilie, übereinstimmendes Dokument

EPO FORM 1503 03.82 (P04C03)

## ANHANG ZUM EUROPÄISCHEN RECHERCHENBERICHT ÜBER DIE EUROPÄISCHE PATENTANMELDUNG NR.

EP 07 01 2551

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

18-09-2007

| Im Recherchenbericht angeführtes Patentdokument | Datum der Veröffentlichung | Mitglied(er) der Patentfamilie | Datum der Veröffentlichung |
|---|---|---|---|
| EP 0234724 A1 | 02-09-1987 | AU 600924 B2 | 30-08-1990 |
| | | AU 6792087 A | 30-07-1987 |
| | | CA 1271892 A1 | 17-07-1990 |
| | | DE 3765793 D1 | 06-12-1990 |
| | | DK 34787 A | 24-07-1987 |
| | | FI 870255 A | 24-07-1987 |
| | | IE 59347 B1 | 09-02-1994 |
| | | JP 2523117 B2 | 07-08-1996 |
| | | JP 62179517 A | 06-08-1987 |
| | | NO 870275 A | 24-07-1987 |
| | | PT 84190 A | 01-02-1987 |
| | | US 4742140 A | 03-05-1988 |
| EP 1365000 A | 26-11-2003 | WO 02064696 A1 | 22-08-2002 |
| | | US 2004075074 A1 | 22-04-2004 |
| US 5387640 A | 07-02-1995 | KEINE | |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- FR 2213333 A
- DE 2702632 A
- EP 234724 A


### In der Beschreibung aufgeführte Nicht-Patentliteratur


- Standard Test: WSP 80.8 (05), Standard Test Method for Alcohol Repellency of Nonwoven Fabrics. *European Disposables and Nonwovens Association,* August 2005
- **INDA ; EDANA.** *World Wide Strategic Partner: Standard Test Methods for Nonwovens Industry*
- *Bundesmann: Beregnung, DIN EN 29865 = ISO 9865,* August 1993